# EUROPÄISCHE PATENTSCHRIFT

(11) **EP 1 501 711 B1**
(45) Veröffentlichungstag und Bekanntmachung des Hinweises auf die Patenterteilung: **03.11.2010**
(21) Anmeldenummer: 03747416.0
(22) Anmeldetag: 28.04.2003
(51) Int. Cl.: B60T 8/44, B60T 8/48, B60T 13/14, B60T 13/16

(54) **FAHRZEUGBREMSANLAGE MIT AKTIVER HYDRAULISCHER BREMSKRAFTVERSTÄRKUNG UND STEUERUNGSVERFAHREN DAFÜR**
VEHICLE BRAKING SYSTEM WITH ACTIVE HYDRAULIC BRAKE FORCE ASSISTANCE AND CONTROL METHOD FOR THE SAME
DISPOSITIF DE FREINAGE DE VEHICULE A ASSISTANCE AU FREINAGE HYDRAULIQUE ACTIVE ET PROCEDE DE COMMANDE ASSOCIE

(30) Priorität: 27.04.2002 DE 10218973
(43) Veröffentlichungstag der Anmeldung: 02.02.2005
(73) Patentinhaber: Continental Teves AG & Co. oHG, 60488 Frankfurt am Main (DE); Fennel, Helmut, 65812 Bad Soden (DE)
(72) Erfinder: STICHER, Thomas, 64354 Reinheim (DE)
(86) Internationale Anmeldenummer: PCT/EP2003/004277
(87) Internationale Veröffentlichungsnummer: WO 2003/093082

(56) Entgegenhaltungen:
- DE-A- 4 102 496
- DE-A- 4 446 525
- DE-A- 10 060 498
- DE-A- 19 632 130
- DE-A- 19 713 715

## Beschreibung

Die Erfindung betrifft ein Verfahren zur Steuerung einer hydraulischen Fahrzeugbremsanlage mit aktiver hydraulischer Bremskraftverstärkung, bei dem der Fahrer mittels einer Betätigungseinrichtung, vorzugsweise ein Bremspedal, Bremsdruck in einen Hauptbremszylinder einsteuern kann und bei dem der vom Fahrer eingesteuerte Druck mittels einer aktiven hydraulischen Druckerhöhungseinheit, insbesondere eine hydraulische Pumpe, verstärkt wird.

Die Erfindung betrifft ebenso eine hydraulische Bremsanlage für Fahrzeuge, mit einem mittels einer Betätigungseinrichtung, vorzugsweise ein Bremspedal, betätigbaren Hauptbremszylinder, und mit mindestens einer Pumpe, mit deren Druck mindestens eine Radbremse des Fahrzeugs beaufschlagbar ist, zwecks Erzeugung einer hydraulischen Bremskraftverstärkung, welche Pumpe eingangsseitig (Saugseite) mit dem Hauptbremszylinder verbindbar ist über mindestens eine hydraulische Verbindung, in die ein Umschaltventil eingefügt ist, welche Pumpe ausgangsseitig (Druckseite) mit mindestens einer Radbremse des Fahrzeugs verbindbar ist über mindestens eine hydraulische Verbindung und mit dem Hauptbremszylinder verbindbar ist über mindestens eine hydraulische Verbindung, in die ein Trennventil eingefügt ist.

Eine derartiges Verfahren und eine derartige Bremsanlage ist aus der DE-A-19 632 130 bekannt.

Vakuum-Bremskraftverstärker benötigen eine vom Motor zur Verfügung gestellte Unterdruckversorgung zur Unterstützung der von dem Fahrer aufzubringenden Pedalkraft. Im Zuge neuer Motorentechnik, wie z.B. Benzin-Direkteinspritzer oder Dieselmotoren, ist eine hinreichende Unterdruckversorgung zur Bremskraftunterstützung immer seltener gegeben. Es wird eine zusätzliche Fremdenergie notwendig, um den Fahrer bei seiner Bremsung zu unterstützen. Die Fahrerkraft wird bei bestimmten Systemen über einen Vakuum-Bremskraftverstärker und einen Tandem-Hauptbremszylinder (THZ) in einen hydraulischen Druck umgesetzt, der -am Ausgang des THZ- durch Drucksensoren gemessen wird. Eine Möglichkeit der zusätzlichen Bremskraftunterstützung ist in Bremssystemen mit aktiver hydraulischer Bremskraftunterstützung dadurch realisiert, dass ein zusätzlicher hydraulischer Druck mit einer Druckerhöhungseinheit erzeugt wird.

Es ist bei diesem Druckaufbau bedingt durch Trägheiten und Lüftspiele im System und durch die begrenzte Leistung der Pumpe problematisch, einen gleichmäßigen Druckaufbau mit einer gewünschten Charakteristik zu realisieren.

Der Erfindung liegt die Aufgabe zugrunde, ein Verfahren und eine Bremsanlage der eingangs genannten Art zu verbessern und derart weiterzubilden, dass deren Nachteile vermieden werden. Insbesondere soll die Bremsanlage und das Verfahren so ausgebildet werden, dass der Bremsdruckaufbau beim Beginn eines Bremsvorgangs verbessert wird.

Diese Aufgabe wird durch die Merkmale der unabhängigen Patentasprüche gelöst.

Durch die Erfindung nach Anspruch 1 wird bei einem Verfahren der eingangs genannten Art vorgesehen, dass ein Bremswunsch oder ein Verdacht eines Bremswunsches des Fahrers ermittelt wird und bei einem erkannten Bremswunsch oder Verdacht eines Bremswunsches des Fahrers ein in einer den Hauptbremszylinder und die hydraulische Druckerhöhungseinheit verbindenden Leitung angeordnetes Trennventil geöffnet wird oder geöffnet bleibt und die Druckerhöhungseinheit zwecks Druckerzeugung angesteuert wird.

Bei einem derartigen Verfahren mit "aktiver" hydraulischer Bremskraftverstärkung ist zumindest ein Teil der Bremsunterstützung durch die Druckerhöhungseinheit aktiv erzeugbar, wobei nach der Erfindung aber schon nach dem Erkennen eines Bremswunsches oder eines Verdachts eines Bremswunsches des Fahrers die Druckerhöhungseinheit in den Radbremsen zur aktiven Bremskraftverstärkung angesteuert wird. Vorteilhaft kann so im Bedarfsfall ein deutlich schnellerer Druckanstieg im System realisiert und damit die Leistung des Gesamtsystems gesteigert werden. Denn die Pumpe ist bereits angelaufen, wenn anschließend das Bremspedal durch den Fahrer weiter betätigt wird.

Vorzugsweise wird zur aktiven Bremskraftverstärkung eine in der Bremsanlage vorgesehene Pumpe, insbesondere eine bei Bremssystemen mit einem Antiblockiersystem (ABS) oder einer Fahrdynamikregelung (ESP-System) bereits vorhandene hydraulische Pumpe, eingesetzt. Die Vorteile der Erfindung können daher ohne größeren Bauteilaufwand realisiert werden. Ein weiterer Vorteil ist es, dass die Bremskraftverstärkung im Grundsatz frei einstellbar ist durch eine entsprechende Ansteuerung der Pumpe und des Trennventils.

Als Pumpe kann jede Pumpe eingesetzt werden, die eine genügend hohe Leistung aufweist, um ein bestimmtes Volumen des Druckmittels schnell genug in die Radbremsen zu fördern. Vorzugsweise werden Kolbenpumpen eingesetzt. Gegenüber Zahnradpumpen sind die Kolbenpumpen kostengünstiger und besitzen Verschleißvorteile.

Beim Druckaufbau durch Ansteuerung der Pumpe und bei geöffnetem Trennventil wird vorteilhaft ein ggf. vorhandenes Umschaltventil zwischen der Eingangsseite der Pumpe und dem Hauptbremszylinder geöffnet, damit Druckflüssigkeit über bzw. aus dem Hauptbremszylinder angesaugt werden kann und durch die Pumpe in die Radbremsen befördert werden kann.

Nach der Erfindung ist es vorgesehen, dass nach der Ansteuerung der Druckerhöhungseinheit ein Staudruck vor dem Trennventil erzeugt wird und zumindest Lüftspiele im System überwunden und Bremsbeläge an Bremstrommeln bzw. Bremsscheiben angelegt werden. Das bedeutet, es ist ein Vorfüllen der Radbremsen und Anlegen der Bremsbeläge mit Hilfe des durch den Motor erzeugten Drucks bei geöffnetem Trennventil vorgesehen. Der Druck entsteht erfindungsgemäß durch einen Staudruck im System beim Druckaufbau über die Pumpe. Durch die angelegten Bremsbeläge wird im Niedrig-Druck-Bereich die Dynamik und insbesondere das Ansprechverhalten der erfindungsgemäßen Bremsanlage erhöht. Das System bietet auch einen hohen Pedalkomfort des Bremspedals, da der Druckaufbau entsprechend einer gewünschten Charakteristik einstellbar ist. Darüber hinaus kann zusätzlich ein sehr geringer Bremsdruck von einigen bar, vorzugsweise aber 1 bis 2 bar, erzeugt werden, insbesondere dann, wenn der Verdacht für eine Notbremssituation erkannt wird.

Nach der Erfindung ist es vorgesehen, dass das Trennventil zumindest so lange geöffnet bleibt, bis erkannt ist, dass der Bremsvorgang durch den Fahrer eingeleitet wird.

Erfindungsgemäß wird dann die Einleitung des Bremsvorgangs durch den Fahrer erkannt, wenn das Bremspedal durch den Fahrer berührt wird, eine bestimmte Kraft auf das Bremspedal ausgeübt und/oder ein bestimmter Weg des Bremspedals aus seiner Ruhe- oder Ausgangsposition in Betätigungsrichtung erkannt wird.

Es ist nach der Erfindung vorgesehen, dass das Trennventil für eine vorgegebene Zeitdauer geöffnet bleibt.

Nach der Erfindung ist es vorgesehen, dass die Zeitdauer der Öffnung des Trennventils variabel eingestellt wird nach Maßgabe des Bremspedalwegs, der Bremspedalgeschwindigkeit, der Bremspedalbeschleunigung und/oder des Druckgradienten am THZ.

Es ist nach der Erfindung vorgesehen, dass der Bremswunsch des Fahrers auf Grundlage einer Fahrerfußbewegung vor dem Bremsvorgang ermittelt wird.

Erfindungsgemäß ist es vorgesehen, dass der Bremswunsch des Fahrers auf Grundlage einer Gaspedalbewegung, wie Gaspedalweg, Gaspedalrücknahmegeschwindigkeit und/oder Gaspedalrücknahmebeschleunigung, vor dem Bremsvorgang ermittelt wird.

Es ist nach der Erfindung ebenso vorgesehen, dass der Bremswunsch des Fahrers auf Grundlage einer Umsetzbewegung des Fahrerfußes vom Gaspedal auf das Bremspedal ermittelt wird.

Nach der Erfindung ist es vorgesehen, dass das Trennventil ein hydraulisches Ventil, vorzugsweise ein analogisiertes Ventil, ist. Dieses Ventil kann durch eine entsprechende Ansteuerung zwischen einer (voll) geöffneten Stellung und einer (voll) geschlossenen Stellung auch Zwischenstellungen einnehmen und so zumindest näherungsweise ein definiertes Druckgefälle zwischen den beiden Seiten des Ventils einstellen.

Es sind ferner zusätzliche Ventilfunktionen vorgesehen. Dass bedeutet, die Ventile können als im unbestromten Zustand offene SO-Ventile oder geschlossene SG-Ventile ausgeführt sein. Bei einem Ausfall der elektrischen Spannungsversorgung des Systems oder einer Störung einer elektronischen Bremsenregelung kann so durch ein SG-Ventil die hydraulische Verbindung zwischen dem Druckmittelvorratsbehälter und der Pumpe abgesperrt sein und mittels eines SO-Ventils die hydraulische Verbindung zwischen Hauptzylinder und den Radbremsen geöffnet sein, wodurch eine Bremsung zumindest mit ggf. durch Vakuum-Bremskraftverstärker verstärkte Fahrerfußkraft sicher gewährleistet ist.

Das Verfahren ist vorzugsweise Teil eines Programms einer elektronischen Bremsenregelungseinheit für das Fahrzeugbremssystem.

Diese Aufgabe wird ferner mit einer gattungsgemäßen Bremsanlage gelöst, die dadurch gekennzeichnet ist, dass Erkennungsmittel vorgesehen sind, um einen Bremswunsch des Fahrers zu erkennen oder einen Verdacht eines Bremswunsches des Fahrers zu ermitteln und dass eine elektronische Auswerteeinheit zum Ansteuern der Pumpe und des Trennventils vorgesehen ist, die bei erkanntem Bremswunsch des Fahrers oder ermitteltem Verdacht eines Bremswunsches des Fahrers das Trennventil zwecks Öffnung der Verbindung zur Pumpe ansteuert und die Pumpe zwecks Erzeugung hydraulischen Drucks ansteuert.

Nach der Erfindung ist es vorgesehen, dass die Druckseite der Pumpe durch eine hydraulische Verbindung mit der Radbremse verbunden ist, in die ein Einlassventil eingefügt ist, die Radbremse des Fahrzeugs mit dem Hauptbremszylinder verbunden ist über eine hydraulische Verbindung, in die ein Auslassventil eingefügt ist und dass dem Hauptbremszylinder ein Drucksensor und den Fahrzeugrädern ein Raddrehzahlsensor zugeordnet ist.

Die Erfindung wird nun anhand einer Abbildung (Fig.) beispielhaft näher erläutert.

Die Fig. zeigt eine erfindungsgemäße Vorrichtung.

Die in der Fig. dargestellte zweikreisige Bremsanlage für Kraftfahrzeuge besteht aus einer Betätigungseinheit 1, z.B. einem Tandem-Hauptbremszylinder (THZ), mit einem Vakuum-Bremskraftverstärker 2, der durch ein Bremspedal 3 betätigt wird. An der Betätigungseinheit 1 ist ein Vorratsbehälter 4 angeordnet, der ein Druckmittelvolumen enthält und in der Bremslösestellung an die Arbeitskammer der Betätigungseinheit angeschlossen ist. Der dargestellte Bremskreis weist eine an eine Arbeitskammer der Betätigungseinheit 1 angeschlossene Bremsleitung 5 auf, die die Betätigungseinheit 1 mit der einer Hydraulikeinheit 22 verbindet. Die Bremsleitung 5 weist ein Trennventil 6 auf, das in der Ruhestellung einen offenen Durchgang für die Bremsleitung 5 bildet. Dem Trennventil 6 ist ein in Richtung der Radbremsen 10,11 sich öffnendes Rückschlagventil 7 und ein Druckbegrenzungsventil 25 parallel geschaltet. Das Trennventil dient hier auch als Druckmodulationseinheit. Das Trennventil 6 wird üblicherweise elektromagnetisch betätigt. Vorzugsweise ist das Trennventil ein analogisiertes Ventil. Denn dann ist insbesondere ein kontinuierliches, "analoges" Einstellen des Drucks bzw. eines Druckabbaus möglich.

Die Bremsleitung 5 verzweigt sich in zwei Bremsleitungen 8, 9, die jeweils zu einer Radbremse 10, 11 führen. Die Bremsleitungen 8, 9 enthalten jeweils ein elektromagnetisch betätigbares Einlassventil 12, 19, das in seiner Ruhestellung offen ist und durch Erregung des Betätigungsmagneten in eine Sperrstellung geschaltet werden kann. Jedem Einlassventil 12, 19 ist ein Rückschlagventil 13 parallel geschaltet, das in Richtung des Bremszylinders 1 öffnet. Parallel zu diesen Radbremskreisen ist ein sogenannter Rückförderkreis angeschlossen, der aus Rücklaufleitungen 15, 32, 33 mit einer Pumpe 16 besteht. Die Radbremsen 10, 11 schließen über jeweils ein Auslassventil 14, 17 über Rücklaufleitungen 32, 33 an die Rücklaufleitung 15 an und damit an die Saugseite der Pumpe 16, deren Druckseite mit der Bremsdruckleitung 8 in einem Einmündungspunkt E zwischen dem Trennventil 6 und den Einlassventilen 12, 19 verbunden ist.

Die Pumpe 16 ist vorzugsweise als Hubkolbenpumpe mit nicht näher dargestelltem Druckventil und einem Saugventil ausgebildet. Die Pumpe 16 dient hier als Druckerhöhungseinheit zur Erzeugung der zusätzlichen hydraulischen Bremskraftunterstützung. An der Saugseite der Pumpe 16 befindet sich ein Niederdruckspeicher 20, bestehend aus einem nicht näher bezeichneten Gehäuse mit einer Feder und einem Kolben. In der Verbindung zwischen dem Niederdruckspeicher 20 und der Pumpe 16 ist ein zu der Pumpe öffnendes Rückschlagventil 34 eingesetzt. Die Saugseite der Pumpe 16 ist über eine Saugleitung 30 mit einem Niederdruckdämpfer 18 und einem Umschaltventil 31 mit dem Bremszylinder 1 verbunden. Außerdem weist der Bremskraftübertragungskreis einen Drucksensor 40 auf, der in der Bremsleitung 5 zwischen dem Bremszylinder 1 oder Umschaltventil 31 und dem Trennventil 6 angeordnet ist. Über den Drucksensor 40 wird der Bremszylinder-Druck festgestellt und der eingesteuerte Bremsdruck ermittelt. Die Raddrehzahlen werden durch die Raddrehzahlsensoren 50,51 ermittelt und die Signale einer elektronischen Bremsenregelungseinheit 52 zugeführt. Der elektronischen Regeleinheit 52 ist eine Auswerteeinheit 53 zum Ansteuern der Pumpe 16 und des Trennventils 6 nach Maßgabe einer Fahrerwunscherkennungseinheit 54 zugeordnet.

Die Bremsanlage arbeitet wie folgt:
Wird der Fahrerbremswunsch durch die Fahrerwunscherkennungseinheit 54 erkannt, dann steuert die Auswerteeinheit 53 die Pumpe 16 an und öffnet das Trennventil 6, wodurch ein geringer Druck aufgebaut wird, der ausreicht, die Lüftspiele zu überwinden und die Bremsbeläge der Radbremse 10,11 anzulegen. Erhöht der Fahrer über die Betätigungseinheit 1 mit dem Vakuum-Bremskraftverstärker 2 den Bremsflüssigkeitsdruck im System, wird durch die elektronische Regeleinheit 52, ggf. erst beim Erreichen oder Überschreiten eines Aussteuerpunkts des Vakuum-Bremskraftverstärkers 2, die Pumpe zwecks zusätzlicher Druckerhöhung in den Radbremsen angesteuert. Die Pumpe erfüllt so die Funktion einer zusätzlichen, aktiven hydraulischen Bremskraftverstärkung. Erreicht oder überschreitet der in das System und die Radbremsen eingesteuert Bremsdruck einen Wert und werden die Räder in den Bremsschlupf überführt, dann wird nach Maßgabe der Signale der Raddrehzahlsensoren 50,51 durch die elektronische Regeleinheit 52 eine ABS-Regelung eingeleitet und die Ein- und Auslassventile 12,14,17,19 entsprechend angesteuert.

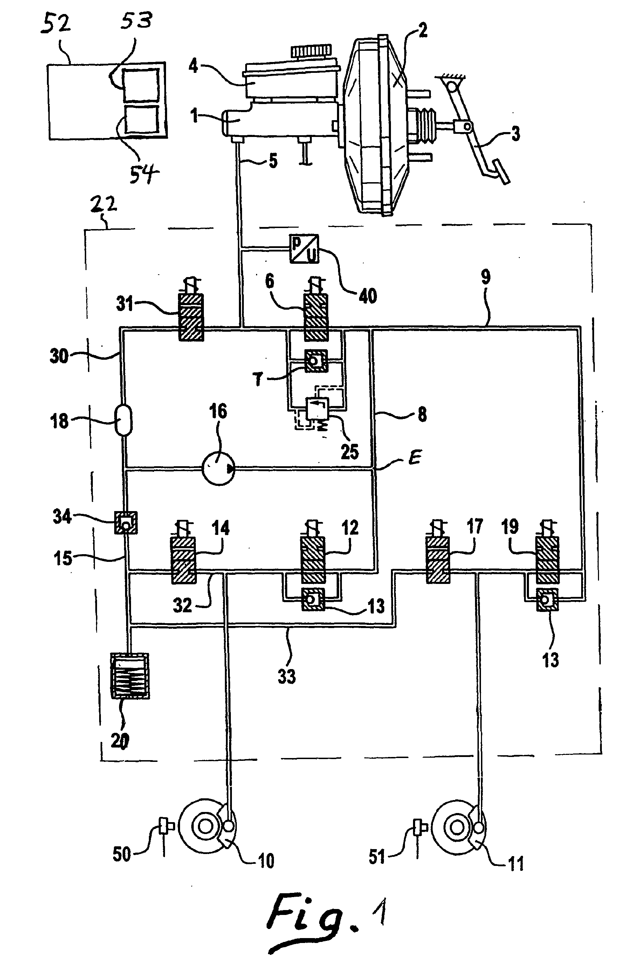

## Patentansprüche

1. Verfahren zur Steuerung einer hydraulischen Fahrzeugbremsanlage mit aktiver hydraulischer Bremskraftverstärkung, bei dem der Fahrer mittels einer Betätigungseinrichtung, vorzugsweise ein Bremspedal (3), Bremsdruck in einen Hauptbremszylinder (1) einsteuern kann, bei dem der vom Fahrer eingesteuerte Druck mittels einer aktiven hydraulischen Druckerhöhungseinheit (16), insbesondere eine hydraulische Pumpe, verstärkt wird,
**dadurch gekennzeichnet, dass** ein Bremswunsch oder ein Verdacht eines Bremswunsches des Fahrers ermittelt wird und bei einem erkannten Bremswunsch oder Verdacht eines Bremswunsches des Fahrers ein in einer den Hauptbremszylinder (1) und die hydraulische Druckerhöhungseinheit (16) verbindenden Leitung (5) angeordnetes Trennventil (6) geöffnet wird oder geöffnet bleibt und die Druckerhöhungseinheit (16) zwecks Druckerzeugung angesteuert wird.

2. Verfahren nach Anspruch 1,
**dadurch gekennzeichnet, dass** nach der Ansteuerung der Druckerhöhungseinheit (16) ein Staudruck vor dem Trennventil (6) erzeugt wird und zumindest Lüftspiele im System überwunden und Bremsbeläge an Bremstrommeln bzw. Bremsscheiben angelegt werden.

3. Verfahren nach Anspruch 1 oder 2,
**dadurch gekennzeichnet, dass** das Trennventil (6) so lange geöffnet bleibt, bis erkannt ist, dass der Bremsvorgang durch den Fahrer eingeleitet wird.

4. Verfahren nach Anspruch 3,
**dadurch gekennzeichnet, dass** dann die Einleitung des Bremsvorgangs durch den Fahrer erkannt wird, wenn das Bremspedal durch den Fahrer berührt wird, eine bestimmte Kraft auf das Bremspedal ausgeübt wird und/oder ein bestimmter Weg des Bremspedals aus seiner Ruhe- oder Ausgangsposition in Betätigungsrichtung erkannt wird.

5. Verfahren nach einem der Ansprüche 1 bis 4,
**dadurch gekennzeichnet, dass** das Trennventil (6) für eine vorgegebene Zeitdauer geöffnet bleibt.

6. Verfahren nach einem der Ansprüche 1 bis 5,
**dadurch gekennzeichnet, dass** die Zeitdauer der Öffnung des Trennventils (6) variabel eingestellt wird nach Maßgabe des Bremspedalwegs, der Bremspedalgeschwindigkeit, der Bremspedalbeschleunigung und/oder des Druckgradienten am Hauptbremszylinder (1).

7. Verfahren nach einem der Ansprüche 1 bis 6,
**dadurch gekennzeichnet, dass** der Bremswunsch des Fahrers auf Grundlage einer Fahrerfußbewegung vor dem Bremsvorgang ermittelt wird.

8. Verfahren nach Anspruch 7,
**dadurch gekennzeichnet, dass** der Bremswunsch des Fahrers auf Grundlage einer Gaspedalbewegung, wie Gaspedalweg, Gaspedalrücknahmegeschwindigkeit und/oder Gaspedalrücknahmebeschleunigung, vor dem Bremsvorgang ermittelt wird.

9. Verfahren nach Anspruch 7 oder 8,
**dadurch gekennzeichnet, dass** der Bremswunsch des Fahrers auf Grundlage einer Umsetzbewegung des Fahrerfußes vom Gaspedal auf das Bremspedal ermittelt wird.

10. Verfahren nach einem der Ansprüche 1 bis 9,
**dadurch gekennzeichnet, dass** das Trennventil ein hydraulisches Ventil, vorzugsweise ein analogisiertes Ventil, ist.

11. Hydraulische Bremsanlage für Fahrzeuge, mit einem mittels einer Betätigungseinrichtung, vorzugsweise ein Bremspedal (3), betätigbaren Hauptbremszylinder (1), und mit mindestens einer Pumpe (16), mit deren Druck mindestens eine Radbremse (10,11) des Fahrzeugs beaufschlagbar ist zwecks Erzeugung einer hydraulischen Bremskraftverstärkung, welche Pumpe (16) an der Saugseite mit dem Hauptbremszylinder (2) verbindbar ist über mindestens eine hydraulische Verbindung (30), in die ein Umschaltventil (31) eingefügt ist, welche Pumpe (16) an der Druckseite mit mindestens einer Radbremse (10,11) des Fahrzeugs verbindbar ist über mindestens eine hydraulische Verbindung (8,9) und mit dem Hauptbremszylinder (1) verbindbar ist über mindestens eine hydraulische Verbindung (5), in die ein Trennventil (6) eingefügt ist,
**dadurch gekennzeichnet, dass** Erkennungsmittel vorgesehen sind, um einen Bremswunsch des Fahrers zu erkennen oder einen Verdacht eines Bremswunsches des Fahrers zu ermitteln und dass eine elektronische Auswerteeinheit (53) zum Ansteuern der Pumpe (16) und des Trennventils (6) vorgesehen ist, die bei erkanntem Bremswunsch des Fahrers oder ermitteltem Verdacht eines Bremswunsches des Fahrers das Trennventil (6) zwecks Öffnung der Verbindung zur Pumpe ansteuert und die Pumpe (16) zwecks Erzeugung hydraulischen Drucks ansteuert.

12. Hydraulische Bremsanlage nach Anspruch 11,
**dadurch gekennzeichnet, dass** die Druckseite der Pumpe (16) durch eine hydraulische Verbindung mit der Radbremse (10,11) verbunden ist, in die ein Einlassventil (12,19) eingefügt ist, die Radbremse (10,11) des Fahrzeugs mit dem Hauptbremszylinder (1) verbunden ist über eine hydraulische Verbindung, in die ein Auslassventil (14,17) eingefügt ist und dass dem Hauptbremszylinder (1) ein Drucksensor und den Fahrzeugrädern ein Raddrehzahlsensor zugeordnet ist.

## Claims

1. Method for controlling a hydraulic vehicle brake system having active hydraulic brake boosting, in which the driver can feed brake pressure into a brake master cylinder (1) by means of an actuating device, preferably a brake pedal (3), and in which the pressure fed in by the driver is boosted by means of an active hydraulic pressure-increasing unit (16), in particular a hydraulic pump, **characterized in that** a braking wish or a suspicion of a braking wish of the driver is determined, and, in the event of a detected braking wish or suspicion of a braking wish of the driver, an isolating valve (6) arranged in a line (5) connecting the brake master cylinder (1) and the hydraulic pressure-increasing unit (16) is opened or remains open, and the pressure-increasing unit (16) is activated for the purpose of pressure generation.

2. Method according to Claim 1, **characterized in that**, after the activation of the pressure-increasing unit (16), a dynamic pressure is generated upstream of the isolating valve (6) and at least brake-lifting clearances in the system are overcome and brake linings are brought to bear against brake drums or brake discs.

3. Method according to Claim 1 or 2, **characterized in that** the isolating valve (6) remains open until it is detected that the braking operation is initiated by the driver.

4. Method according to Claim 3, **characterized in that** the initiation of the braking operation by the driver is detected when the brake pedal is touched by the driver, a specific force is exerted upon the brake pedal and/or the specific travel of the brake pedal out of its position of rest or initial position in the direction of actuation is detected.

5. Method according to one of Claims 1 to 4, **characterized in that** the isolating valve (6) remains open for a predetermined time duration.

6. Method according to one of Claims 1 to 5, **characterized in that** the time duration of the opening of the isolating valve (6) is set variably in accordance with the brake-pedal travel, the brake-pedal speed, the brake-pedal acceleration and/or the pressure gradient at the brake master cylinder (1).

7. Method according to one of Claims 1 to 6, **characterized in that** the braking wish of the driver is determined on the basis of a movement of the driver's foot before the braking operation.

8. Method according to Claim 7, **characterized in that** the braking desire of the driver is determined on the basis of an acceleration-pedal movement, such as the accelerator-pedal travel, accelerator-pedal retraction speed and/or accelerator-pedal retraction acceleration, before the braking operation.

9. Method according to Claim 7 or 8, **characterized in that** the braking desire of the driver is determined on the basis of a change-over movement of the driver's foot from the accelerator pedal onto the brake pedal.

10. Method according to one of Claims 1 to 9, **characterized in that** the isolating valve is a hydraulic valve, preferably an analogized valve.

11. Hydraulic brake system for vehicles, with a brake master cylinder (1) actuable by means of an actuating device, preferably a brake pedal (3), and with at least one pump (16), by means of which pressure can be exerted upon at least one wheel brake (10, 11) of the vehicle for the purpose of generating hydraulic brake boosting, which pump (16) is connectable on the suction side to the brake master cylinder (1) via at least one hydraulic connection (30), into which a changeover valve (31) is inserted, and which pump (16) is connectable on the delivery side to at least one wheel brake (10, 11) of the vehicle via at least one hydraulic connection (8, 9) and is connectable to the brake master cylinder (1) via at least one hydraulic connection (5), into which an isolating valve (6) is inserted, **characterized in that** detection means are provided in order to detect a braking wish of the driver or to determine a suspicion of a braking wish of the driver, and **in that** an electronic evaluation unit (53) for activating in the pump (16) and the isolating valve (6) is provided, which, when a braking wish of the driver is detected or a suspicion of a braking wish of the driver is determined, activates the isolating valve (6) for the purpose of opening the connection to the pump and activates the pump (16) for the purpose of generating hydraulic pressure.

12. Hydraulic brake system according to Claim 11, **characterized in that** the delivery side of the pump (16) is connected to the wheel brake (10, 11) by means of a hydraulic connection, into which an inlet valve (12, 19) is inserted, the wheel brake (10, 11) of the vehicle is connected to the brake master cylinder (1) via a hydraulic connection, into which an outlet valve (14, 17) is inserted, and **in that** the brake master cylinder (1) is assigned a pressure sensor and the vehicle wheels are assigned a wheel rotational-speed sensor.

## Revendications

1. Procédé de commande d'une installation de freinage hydraulique de véhicule, comprenant une assistance au freinage hydraulique active, dans lequel le conducteur peut, au moyen d'un dispositif d'actionnement, de préférence une pédale de frein (3), injecter une pression de freinage dans un cylindre de frein principal (1), la pression injectée par le conducteur étant amplifiée au moyen d'une unité d'augmentation de pression hydraulique active (16), notamment une pompe hydraulique, **caractérisé en ce qu'**un souhait de freinage ou une anticipation d'un souhait de freinage du conducteur sont détectés et en cas de détections de souhait de freinage ou d'anticipation de souhait de freinage du conducteur, une soupape de coupure (6) disposée dans une conduite (5) reliant le cylindre de frein principal (1) et l'unité d'augmentation de pression hydraulique (16) est ouverte ou reste ouverte et l'unité d'augmentation de pression (16) est commandée en vue de produire de la pression.

2. Procédé selon la revendication 1,
**caractérisé en ce qu'**après la commande de l'unité d'augmentation de pression (16), une pression dynamique est produite avant la soupape de coupure (6), et au moins des jeux dans le système sont surmontés et les garnitures de frein sont appliquées contre les tambours de frein ou les disques de frein.

3. Procédé selon la revendication 1 ou 2,
**caractérisé en ce que** la soupape de coupure (6) reste ouverte jusqu'à ce que l'on reconnaisse que l'opération de freinage a été amorcée par le conducteur.

4. Procédé selon la revendication 3,
**caractérisé en ce que** l'amorce de l'opération de freinage par le conducteur est ensuite reconnue lorsque la pédale de frein est actionnée par le conducteur, qu'une force déterminée est exercée sur la pédale de frein et/ou qu'une course déterminée de la pédale de frein hors de sa position de repos ou de départ dans la direction d'actionnement est reconnue.

5. Procédé selon l'une quelconque des revendications 1 à 4, **caractérisé en ce que** la soupape de coupure (6) reste ouverte pendant une durée prédéfinie.

6. Procédé selon l'une quelconque des revendications 1 à 5, **caractérisé en ce que** la durée de l'ouverture de la soupape de coupure (6) est ajustée de manière variable en fonction de la course de la pédale de frein, de la vitesse de la pédale de frein, de l'accélération de la pédale de frein et/ou du gradient de pression au niveau du cylindre de frein principal (1).

7. Procédé selon l'une quelconque des revendications 1 à 6, **caractérisé en ce que** le souhait de freinage du conducteur est détecté sur la base d'un mouvement du pied du conducteur avant l'opération de freinage.

8. Procédé selon la revendication 7,
**caractérisé en ce que** le souhait de freinage du conducteur est détecté sur la base d'un mouvement de la pédale d'accélération, comme la course de la pédale d'accélération, la vitesse de retour de la pédale d'accélération et/ou l'accélération de retour de la pédale d'accélération, avant l'opération de freinage.

9. Procédé selon la revendication 7 ou 8,
**caractérisé en ce que** le souhait de freinage du conducteur est détecté sur la base d'un mouvement de transfert du pied du conducteur de la pédale d'accélération à la pédale de frein.

10. Procédé selon l'une quelconque des revendications 1 à 9, **caractérisé en ce que** la soupape de coupure est une soupape hydraulique, de préférence une soupape analoguisée.

11. Installation de freinage hydraulique de véhicules, comprenant un cylindre de frein principal (1) pouvant être commandé au moyen d'un dispositif d'actionnement, de préférence une pédale de frein (3) et comprenant au moins une pompe (16), dont la pression permet de solliciter un frein de roue (10, 11) du véhicule en vue de produire une assistance au freinage hydraulique, ladite pompe (16) pouvant être connectée du côté aspiration au cylindre de frein principal (1) par le biais d'au moins une connexion hydraulique (30), dans laquelle est introduite une soupape d'inversion (31), ladite pompe (16) pouvant être connectée du côté refoulement à au moins un frein de roue (10, 11) du véhicule, par le biais d'au moins une connexion hydraulique (8, 9) et pouvant être connectée au cylindre de frein principal (1) par le biais d'au moins une connexion hydraulique (5), dans laquelle est introduite une soupape de coupure (6),
**caractérisée en ce que** des moyens de détection sont prévus pour détecter un souhait de freinage du conducteur ou une anticipation d'un souhait de freinage du conducteur, et **en ce qu'**une unité d'analyse électronique (53) est prévue pour commander la pompe (16) et la soupape de coupure (6), laquelle commande la soupape de coupure (6) en vue de l'ouverture de la connexion à la pompe et commande la pompe (16) en vue de produire une pression hydraulique lorsqu'un souhait de freinage du conducteur ou une anticipation d'un souhait de freinage du conducteur sont détectés.

12. Installation de freinage hydraulique selon la revendication 11, **caractérisée en ce que** le côté refoulement de la pompe (16) est connecté par une connexion hydraulique au frein de roue (10, 11), dans laquelle connexion hydraulique est introduite une soupape d'entrée (12, 19), le frein de roue (10, 11) du véhicule est connecté au cylindre de frein principal (1) par le biais d'une connexion hydraulique dans laquelle est introduite une soupape de sortie (14, 17), et **en ce que** le cylindre de frein principal (1) est associé à un capteur de pression et les roues du véhicule sont associées à un capteur de vitesse de rotation des roues.
